Europäisches Patentamt

European Patent Office

Office européen des brevets

(19)

(11) Publication number: **0 059 080**

**B1**

# EUROPEAN PATENT SPECIFICATION

(45) Date of publication of patent specification: **21.05.86**

(21) Application number: **82300845.3**

(22) Date of filing: **19.02.82**

(51) Int. Cl.⁴: **C 08 F 2/34, C 08 F 10/00, B 01 J 8/38**

(54) **Process and apparatus for gas phase polymerization of olefins.**

(30) Priority: **19.02.81 JP 23309/81**

(43) Date of publication of application:
**01.09.82 Bulletin 82/35**

(45) Publication of the grant of the patent:
**21.05.86 Bulletin 86/21**

(84) Designated Contracting States:
**BE DE FR GB IT**

(56) References cited:
**FR-A-2 093 276
FR-A-2 194 749
FR-A-2 278 707
GB-A-1 059 077
GB-A-1 256 624**

(73) Proprietor: **Chisso Corporation
6-32, Nakanoshima 3-chome Kita-ku
Osaka-shi Osaka-fu (JP)**

(72) Inventor: **Hattori, Nobutaka
1809-86, Tokemachi
Chibashi Chibaken (JP)**
Inventor: **Funahashi, Wataru
101-33, Nitonacho
Chibashi Chibaken (JP)**
Inventor: **Yanoshita, Minoru
1061-11, Hoshikukicho
Chibashi Chibaken (JP)**

(74) Representative: **Ruffles, Graham Keith et al
MARKS & CLERK 57-60 Lincoln's Inn Fields
London WC2A 3LS (GB)**

Courier Press, Leamington Spa, England.

## Description

This invention relates to a process for gas phase polymerization of olefins, including copolymerization, and an apparatus therefor.

More particularly, the invention provides a process for gas phase polymerization which mainly comprises (i) employing a fluidized bed reaction vessel of which the main part has an inverted truncated cone shape, equipped with an agitator; (ii) using a catalyst subjected to a preliminary polymerization treatment (hereinafter abbreviated sometimes to pretreated catalyst); and (iii) removing the polymerization reaction heat mainly by the latent heat of vaporization of a liquid organic quenching agent (hereinafter abbreviated sometimes to quenching agent) supplied through many nozzles in dispersed form into the fluidized bed part of the vessel containing the catalyst and polymer particles. The invention also provides the apparatus of the above item (i) for the process.

Gas phase polymerization of olefins is known wherein polymerization of alpha-olefins such as ethylene, propylene, etc, is carried out in a reaction bed comprising a catalyst, solid phase particles of polymer and the alpha-olefin in gas phase. Further, for the polymerization apparatus therefor, various kinds of apparatus have been proposed such as an agitiation vessel of vertical type, an agitation vessel of horizontal type, a reaction vessel of fluidized bed type and further, a reaction vessel of fluidized bed type equipped with an agitator wherein an agitating element and a gas current are simultaneously used (hereinafter referred to as an agitation-fluidization vessel); however, use of these known apparatus has some problems.

First, in the case of agitation vessels of vertical type, the power required for agitation, particularly that at the time of starting the agitation, is so great that a long agitating shaft cannot be employed and it is difficult to employ a large scale apparatus.

Next, in the case of agitation vessels of horizontal type, while the power required for agitation is less than that in the case of agitation vessel of vertical type having the same volume, the upper space in the vessel has less height so that particles whirled up by the agitation are liable to be entrained by unreacted gas and carried away to the outside of the reaction vessel.

In the case of reaction vessels of fluidized bed type, a large amount of a gas for fluidizing the solid phase particles passes through the inside of the vessel as well as gas participating in the reaction; hence in order to recover the particles whirled up by the gas, it is necessary to increase the upper space of the vessel and also it is inevitable to provide equipment for collecting fine particles escaping away from the vessel. Further, classification is liable to occur within the vessel due to the difference in the particle size or density of the polymer or catalyst particles; hence the tolerable variation in the height of the reaction layer and the gas flow rate are so small for maintaining stabilized reaction layer that the load variation range of the apparatus is narrow.

On the other hand, in the case of the agitation-fluidization vessels, mixing by means of the agitating element and fluidization by means of gas are simultaneously employed; hence the agitation power required is less than that in the case of the reaction vessel of agitation type; the amount of gas required for fluidization is also smaller than that in the case of the reaction vessel of fluidized bed type; and moreover it is possible to allow a wide range of variation in the load level established and fluctuation occurring under such a load level. Use of such an agitation-fluidization vessel has been proposed for gas phase polymerization of olefins (Japanese Patent Publication No. Sho 43—24679/1968). Such a proposal, however, has still raised various problems. Namely, catalysts generally used for olefin polymerization are solids having greater densities than those of polymer particles, and these polymer particles are nonuniform in size due to the nonuniformity of catalyst particles, and highly active catalyst particles cause cohesion to each other; hence for complicated causes as above, catalyst dispersion in the fluidized bed is liable to become nonuniform. Further, since the heat capacity and the heat conductivity of the gas as a medium for dispersing the catalyst particles are small, removal of the polymerization heat is insufficient, and a nonuniform temperature distribution is liable to be formed within the fluidized bed, to cause cohesion and melt-adhesion of polymer particles to each other. Thus, even in the case of the agitation-fluidization vessel, a long term stabilized operation has been difficult.

For making the catalyst dispersion uniform, a process has been proposed wherein a catalyst in advance supported on or adhered to polymer particles or inorganic inert carrier particles is fed into the reaction vessel. However, in the case of such a process, the operation is troublesome, and moreover, particularly in the latter case, an operation of removing ashes, the inorganic component, from the resulting polymer is required. Further, for a similar purpose, intensification of agitation in the reaction vessel or injection of catalyst into the fluidized bed may be conceived, but according to these processes, the catalyst particles and the polymer particles are brought into fine powder form and escape of such fine powders to the outside of the vessel increases. Furthermore, the catalyst brought into fine powder is liable of adhere onto the inner wall surface of the reaction vessel and polymerization reaction proceeds on such an inner wall surface. Thus, difficulties such as hindrance of agitation, formation of polymer lumps or polymers of different quality, etc, occur.

In the gas phase polymerization of olefins, a process is known wherein the latent heat of vaporization of liquid organic quenching agent injected into the reaction vessel is used for removing the reaction heat. For the quenching agent, liquids which vaporize under the reaction conditions and are inert to the reaction are used, such as paraffins for example propane, butane, pentane, hexane, heptane, etc, or olefins themselves to be polymerized.

The molar polymerization heats of olefins are much greater than the latent heats of vaporization per mol of the quenching agents; hence in order to achieve a sufficient cooling effect, it is necessary to add the quenching agents in an amount of 3 to 20 times by weight the amount of olefins polymerized. If such a large amount of the quenching agents is injected inadvertently, the gas flow rate suddenly increases from the injection part upwards within the reaction vessel, due to the vaporization of the quenching agents, and this promotes escape of polymer or catalyst particles to the outside of the vessel. A manner in which the quenching agents are injected at the lower part of the reaction vessel is effective for preventing escape of the particles, but sufficient vaporization and mixing of the quenching agents within the reaction vessel are not only difficult, but also the diameter of the reaction vessel must be greatly enlarged to reduce the gas flow rate, which results in enlarging the whole apparatus. Further, in the case where the agents are injected at the upper part of the vessel, the flow down of the agents is hindered by the ascending gas for fluidization so that the temperature distribution within the fluidized bed for the polymerization reaction is liable to become nonuniform. If the quenching agents are unevenly injected as mentioned above, the gas flow rate locally increases to form a channeling state in the fluidized bed, which causes unstabilization of the reaction state and scattering and escape of the fine particles. Furthermore, if the uneven injection of the quenching agents brings about a local temperature reduction within the fluidized bed for polymerization reaction, there occurs a polymerization reaction in a wet suspension state in the liquid quenching agents, which may cause formation of a polymer having far different physical properties from those of normal polymers obtained by gas phase polymerization and polymer lumps.

According to a known process, an exhaust gas consisting of unreacted olefin gas, vaporized quenching gas, etc, is withdrawn from the reaction vessel and passed through treating steps such as cooling, compression, separation, etc. The resulting repective components are again fed to the reaction vessel. Solid particles entrained by the exhaust gas and escaping away to the outside of the vessel include polymer particles and also catalyst particles having a polymerization activity, in admixture therewith. These particles are separated from the exhaust gas prior to the above treatment, by a separating means such as a cyclone, but in the case where the particles are fine ones of 50 microns or smaller, it is impossible completely to trap them. The fine particles having a polymerization activity, which escape away from the vessel, deposit in the heat-exchanger, compressor, pipework or the like, or are collected by liquefied quenching agent. Polymerization reaction then proceeds locally, to hinder the smooth operation of the equipment. Further, polymer formed by such a polymerization reaction causes various troubles such that the polymer is carried as far as the reaction vessel, where it mixes in the polyolefin under reaction ultimately to cause deterioration in the quality of product.

In the case of the process of gas phase polymerization reaction according to a fluidized bed method, various technical problems must be solved such as stabilization and maintenance of the fluidized bed consisting of nonhomogeneous particles; prevention of cohesion and fine pulverization of catalyst and polymer particles; further, injection of quenching agents where a homogeneous temperature distribution is afforded and no escape of particles occurs; etc.

The present inventors have made various studies on the above problems and found that these can be solved by employing a suitable combination of the following means constituting the present invention.

The present invention firstly provides a process of gas phase polymerization of olefins by the use of a catalyst subjected to a preliminary polymerization treatment, with the improvement mainly comprising the following steps (a) to (f):

(a) using as said catalyst subjected to a preliminary polymerization treatment, a catalyst having a density of 1.2 to 2.5 $g/cm^3$;

(b) feeding said catalyst subjected to a preliminary polymerization treatment, into a fluidized bed polymerization reaction vessel which has an inverted truncated cone shape with a ratio of the height of the diameter of the bottom part of the cone of 1:1 to 5:1 and an angle of the conical axis with the conical surface of 1 to 10°, has a vertical type agitator therein, and has a distribution plate at the bottom part of the cone for forming a fluidized bed, and feeding as fluidizing gas an olefin gas, a mixed gas of an inert gas with the olefin, a circulating olefin gas, or an inert gas, to the bottom part of the vessel to form a fluidized bed of the catalyst, the fluidizing gas being fed to the bottom part of the fluidized bed at a superficial velocity in the range between 50% of the minimal fluidization velocity of the particles and 70% of the terminal velocity of the particles; (c) polymerizing said olefin under agitation by means of the agitator operating at an agitation velocity of 25 to 250 cm/s in terms of peripheral velocity of the agitating element at its tip end, while maintaining a temperature inside the vessel of 30 to 130°C and a pressure of 0 to 50 bar 6 ($kg/cm^2G$);

(d) continuously feeding into the fluidized bed through dispersed injection ports a liquid organic quenching agent having a favourable latent heat of vaporization for offsetting at least almost all of the polymerization heat of said olefin, the quenching agent being a vaporizable paraffin and/or the olefin to be polymerized;

(e) continuously withdrawing from the top part of said polymerization vessel a mixed gas consisting of unpolymerized olefin gas, any unpolymerized vaporized organic quenching agent and any inert gas; and

(f) removing by condensation, most of said unpolymerized organic quenching agent from said mixed gas and feeding by circulation the resulting olefin gas mixture to the above step (b).

By such a process, gas phase polymerization of olefins according to fluidized bed method can be carried out easily, continuously and for a long term and a polyolefin having a superior quality can be prepared.

The olefin is suitably at least one of ethylene, propylene, butene-1 and 4 - methylpentene - 1. Hydrogen can be fed to the polymerization degree-adjusting agent.

The catalyst subjected to a preliminary polymerization treatment is preferably continously fed to said polymerization vessel and the resulting polyolefin powder continuously withdrawn from said polymerization vessel.

The invention also provides an apparatus for gas phase polymerization of olefins, comprising:

a fluidized bed polymerization reaction vessel which has an inverted truncated cone shape with a ratio of the height of the cone to the diameter of the bottom part of the cone of 1:1 to 5:1 and an angle of the conical axis with the conical surface of 1 to 10°, has a vertical type agitator therein and has a distribution plate for forming a fluidized bed, at the bottom part of the cone;

a means for withdrawing inert gas or unreacted olefin, fixed to the top part of the polymerization reaction vessel;

a means for feeding a catalyst subjected to a preliminary polymerization treatment and dispersed injection parts constituting means for feeding a liquid organic quenching agent for removing polymerization heat, both fixed to locations dispersed from the central part to the top part of said vessel; and

a means for withdrawing polyolefin, fixed to a location from the central part of the bottom part of said vessel, above the location of said distribution plate for forming a fluidized bed.

The body of the vessel can be provided with a heating or cooling jacket.

In the polymerization reaction vessel (referred to hereinafter sometimes as reaction vessel) employed in the present invention, solid phase particles (referred to hereinafter sometimes as particles) are fluidized by both a slowly rotating agitating element and a fluidizing gas fed through a distribution plate provided at the bottom part of the truncated cone and ascending through between the particles to form a stabilized fluidized bed. As the fluidizing gas, an olefin itself to be polymerized, or if necessary, a mixed gas of an olefin with hydrogen for controlling the molecular weight, or this mixed gas further containing a quenching agent may be employed. As the fluidizing gas, it is also possible to use an inert gas, alone or in admixture with the above olefin or with the above mixed gas. As such an inert gas, for example argon, nitrogen, etc, may for instance be employed. The fluidizing gas is fed at a superficial velocity to the bottom part of the fluidized bed in the range between 50% of the minimal fluidization velocity of particles and 70% of the terminal velocity of the particles. For example, if the particles are of a polypropylene having a particle size of 100 microns and the fluidizing gas is propylene, the superficial velocity of the gas usually amounts to 0.2 to 17.5 cm/s, preferably 0.5 to 6 cm/s.

The agitator by which the inside of the reaction vessel is agitated is operated at an agitation velocity of 25 to 250 cm/s, preferably 80 to 200 cm/s, in terms of a peripheral velocity of the agitating element at its tip end.

By employing such a mild gas flow rate and such a slow agitation at the same time, it is posssible to prevent fine pulverization of particles and escape thereof to the outside of the reaction vessel, while also preventing cohesion and deposition of particles.

If the gas flow rate is lower than the above range, the velocity of the agitator must be increased for obtaining a stabilized fluidized bed, resulting in an increase in the power required and crushing and fine pulverization of particles by the agitating element. If the gas flow rate exceeds the above range, the contribution of the agitating element to the fluidization of particles is lowered and also escape of particles accompanying the exhast gas is increased.

If the velocity of the agitator is lower that the above range, the agitation will rely solely on the gas flow and escape of particles will increase; hence to provide the agitator becomes meaningless. On the other hand, if the velocity of the agitator is too high, solid particles are brought into fine powder and further such a problem occurs that solid particles collide with and adhere to the wall of the reaction vessel due to the centrifugal force imparted by the agitating element and polymer accumulates on the wall of the vessel.

The agitating shaft of the vertical type agitator may be fitted either concentrically with respect to the vertical axis of the reaction vessel or somewhat eccentrically thereto. Further, a plurality of agitators may be provided using two or more agitating shafts. As for the shape of the agitating element, any of known types such as anchor type, turbine type, propellor type, etc, may be employed but it is preferable to employ a ribbon type agitating element which can provide a relatively good agitation state even when it rotates slowly and also is well adaptable to the shape of the reaction vessel, and to rotate the element in such a direction that particles can move from the upper part to the lower part on the wall surface of the reaction vessel, while from the lower part to the upper part around the center of the reaction vessel. Beside the above agitating element, it is also possible to provide an additional element for scraping off particles adhered onto the wall surface of the vessel, etc.

The reaction vessel employed in the present invention, where solid phase particles consisting of a catalyst and polymer are present forming a fluidized bed, has a vertical inverted truncated cone shape enlarged upward at an angle of the conical axis with the conical surface (hereinafter referred to as enlarged angle), of 1 to 10° and also a ratio of the height to the inner diameter of the bottom part of the cone in the range of 1 to 5. By employing such a reaction vessel having a structure enlarged upward, it is possible to alleviate a rapid increase in the gas flow rate accompanying the addition of a quenching agent to the fluidized bed and the vaporization of the agent and maintain the gas flow rate at the top part of the reaction vessel in the vicinity of the minimal fluidization rate of fines to prevent escape of particles and also maintain a stabilized fluidized bed. In such a reaction vessel, the volume of the fluidized bed generally occupies 50 to 80% of the total volume of the vessel, and in this case, the upper space of the vessel is effective for preventing the escape of fine particles whirled up by the gas flow.

If the ratio of the height to the inner diameter of the bottom part of the truncated cone and/or the enlarged angle exceed the above ranges, no particularly excellent effectiveness is obtained, but rather only an increase in the size of the apparatus will result; hence the above excesses are uneconomical. Particularly if the enlarged angle exceeds the above range, the gas flow rate at the upper part of the reaction vessel is excessively reduced, which results in deposition of particles on the wall of the vessel. If a large amount of the fluidizing gas is employed for preventing the deposition, the gas flow toward the central part of the vessel and particles flow down along the wall of the vessel to make the fluidization mixing non-uniform; hence it is impossible to maintain a desirable fluidized bed. If the ratio of the height to the inner diameter of the bottom part of the truncated cone and the enlarged angle are less than the above ranges, escape of particles into the exhaust gas increases; hence it is difficult to keep a good operational state.

As for the catalyst used in the present invention, any of those which are suitable for contacting with gas phase olefin and converting it into olefin polymer may be used. Thus, known catalysts such as the so-called metal oxide type or Ziegler-Natta type catalysts may be used. Of these, Ziegler-Natta type catalysts are easily used. Particularly preferable are solid catalysts consisting of a combination of an alkylaluminium compound, such as diethylaluminium monochloride, expressed by the general formula $R_nAlX_{3-n}$ wherein R represents an alkyl group; n, 0 to 3; and X, a halogen, with a titanium compound such as titanium trichloride expressed by the general formula $TiX_m$ wherein X represents a halogen atom and m represents a number of 4 or less.

The catalyst is subjected to a preliminary polymerization treatment with an olefin before feeding to the reaction vessel. The object of the preliminary polymerization is to coat the surface of the catalyst particles with olefin polymer and adjust the density of the particles to 1.2 to 2.5 $g/cm^3$, whereby the dispersion of the catalyst particles in the fluidized bed is made uniform and at the same time fine pulverization of the particles due to collision thereof with the agitating element or with each other, or cohesion of particles into larger and rougher ones are prevented. The preliminary polymerization is normally carried out under milder conditions than those in the gas phase (main) polymerization carried out in the reaction vessel. Namely it is preferable to carry it out at a temperature of 10 to 50°C, under a pressure of atmospheric pressure to 2 bar 6 $(kg/cm^2G)$ and at a polymerization rate of 1/100 to 1/1000 of that in the case of the gas phase (main) polymerization.

The olefin used in the preliminary polymerization can be an alpha-olefin, particularly ethylene, propylene, butene-1, pentene-1 or 4 - methylpentene - 1, and may be mixtures of two or more kinds of the above olefins, and further may be the same as or different from olefins used in the gas phase (main) polymerization. As for the apparatus employed for the preliminary polymerization, any of known apparatus employed for liquid phase or gas phase polymerization of olefins may be utilized. The catalyst subjected to the preliminary polymerization treatment may be supplied to the reaction vessel, as it is, or in admixture with an activator such as an alkylaluminium halide, or the catalyst and the activator may be separately supplied.

As for the pressure of the gas phase (main) polymerization, one in the range where the alpha-olefins used can be present in gas phase in the reaction vessel is employed in the range of 0 to 50 bar 6 $(kg/cm^2G)$, preferably in the range of about 15 to 30 bar 6 $(kg/cm^2G)$. The reaction temperature is in the range of 30 to 130°C.

In the process of the present invention, the reaction heat accompanying the olefin polymerization can be removed mainly by the latent heat of vaporization of quenching agent, but it is also possible simultaneously to employ other heat-removing means such as a means wherein a jacket is provided on the outer wall of the reaction vessel and a refrigerant is passes through the jacket. As for the quenching agent, paraffins such as liquefied propane, butane, pentane, hexane, etc, which can be vaporized in the reaction vessel are suitable, and olefins themselves to be used for polymerization may be also used. These may be used either alone or in adimixture.

The quenching agent is fed through injection ports dispersedly arranged on the reaction vessel into the part within the vessel where the fluidized bed is formed, so that a stabilized fluidized bed of solid particles can be maintained and a good contact thereof with the quenching agent can be attained.

As for the constitution and arrangement of the injection ports, for example, it is preferable that the ports be arranged at an interval of 20 to 100 cm in the vertical direction of the reaction vessel and at two or more locations in the outer peripheral direction thereof, for example radially, and also fixed so that the injection direction of the quenching agent can accord with the rotating direction of the agitating element. The injection rate of the quenching agent into the reaction vessel is preferably in the range of 10 to 100 cm/sec in terms of the linear velocity of the liquid at the injection ports.

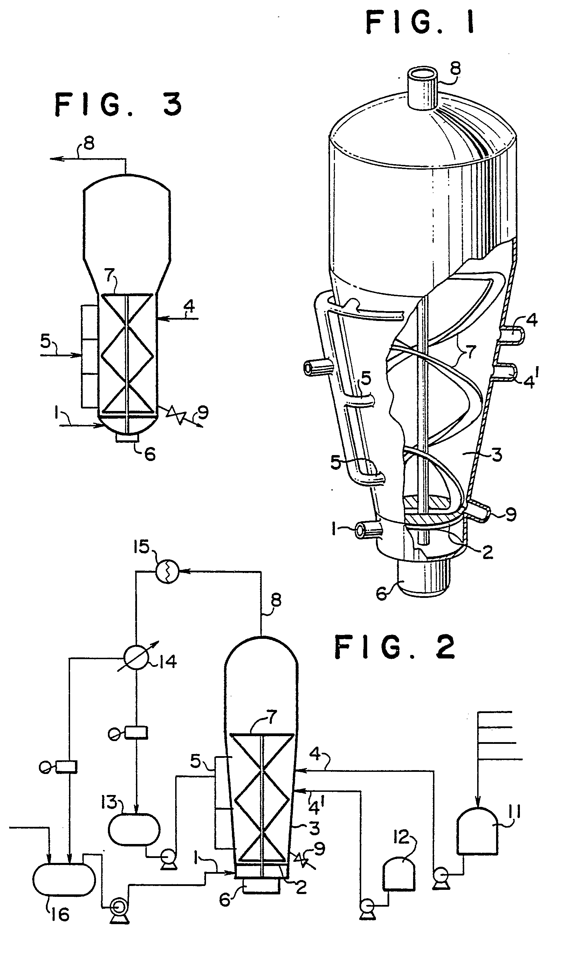

The present invention will be further described by way of example with reference to the accompanying drawings, in which: Fig. 1 shows a schematic view, cutaway in part, of an embodiment of the reaction vessel of the present invention; Fig. 2 shows a systematic view of polymerization apparatus incorporating the reaction vessel of Figure 1; and Fig. 3 shows a schematic view of a reaction vessel not in accordance with invention but employed in Comparative Example 1.

As shown in Figure 1, the apparatus of the invention comprises a fluidized bed polymerization reaction vessel 3 of which the main part has an inverted truncated cone shape with a ratio of the height of the cone to the diameter of the bottom part of the cone of 1:1 to 5:1 and an angle of the conical axis with the conical surface of 1 to 10°, has a vertical agitator 7 therein and has a distribution plate 2 for forming at the bottom part of the cone a fluidized bed; means 8 at the top part of said polymerization reaction vessel for withdrawing inert gas or unreacted gas or unreacted olefin; means 4,4' for feeding a catalyst subjected to a preliminary polymerization treatment and means for feeding a liquid organic quenching agent 5 for removing polymerization heat, both feeding means being at locations removed from the central to the top part of said vessel; and a means 9 for withdrawing polyolefin at a location between the central part and bottom part of said vessel, but above the location of the distribution plate for forming a fluidized bed.

In use, an olefin gas as raw material is fed at gas-introducing port 1 through distribution plate 2 into the reaction vessel 3, while a catalyst and an activator are fed at catalyst-introducing ports 4 and 4' into the reaction vessel 3. The quenching agent is injected at a number of quenching agent-injecting ports 5 arranged on the wall of the reaction vessel. The reaction vessel is provided with an agitating element 7 driven by a motor 6. Unreacted gas is withdrawn at a circulating gas-exhausting port 8 to a circulation system and polymer particles are discharged at discharge port 9 to the outside of the system.

Example 1
(Gas phase polymerization of propylene)
Fig. 2 shows a systematic view of the apparatus employed in Example 1, comprising the reaction vessel 3 as described with reference to Fig. 1, together with a preliminary polymerization vessel 11, an activator vessel 12, a quenching agent tank 13, a heat exchanger 14, filter 15 and olefin tank 16.

Preparation of catalyst:
Into 201 capacity preliminary polymerization vessel 11 were added 101 of n-hexane and 100 g of diethylaluminium monochloride (10% solution in n-hexane), and then 100 g of a titanium trichloride obtained by reducing $TiCl_4$ with an organoaluminium was fed with stirring, and further n-hexane added to make the total volume 151. Propylene gas was continuously blown in in the resulting catalyst liquid at 30°C, under atmospheric pressure, for 10 hours at a rate of 25 g/hour to carry out preliminary polymerization. A sample was taken from the reaction liquid and the solvent was distilled off therefrom to give a pretreated catalyst having a density of 1.75 g/cm³, which was then stored in the preliminary polymerization vessel, in the form of a 5% suspension in n-hexane. 10% solution of diethylaluminium monochloride in n-hexane was separately prepared in an activator vessel 12.

Reaction vessel
In more detail, the reaction vessel has as its main part, a vertical, inverted cone shape which has a diameter of 30 cm at the bottom part thereof, a diameter of 45 cm at the top part and an inclination with the central axis of the vessel, of about 2.9°, and is provided with a distribution plate 2 for gas fluidization, at the bottom part of the cone and an agitating element of two-stage double ribbon type. Quenching agent-injecting ports 5 each having a nozzle of 2 mm in inner diameter are dispersedly arranged at 10 locations in total, two, 30 cm above the dispersion plate 2, four, 50 cm thereabove and four, 70 cm thereabove.

Operation
Into the reaction vessel was fed 3 kg of polypropylene powder prepared in advance, and the agitating element was rotated at a peripheral velocity at its largest diameter of 180 cm/sec. The following were then continuously fed: propylene gas containing 6% by mol of hydrogen at a rate of 1 cm/sec in terms of superficial velocity, just above the distribution plate; the pretreated catalyst liquid at a rate of 70 g/hr and a diethylaluminium monochloride solution at a rate of 40 g/hr; and further, liquefied propylene as the quenching agent at a rate of 70 kg/hr.

The reaction vessel was continously operated for 50 hours under reaction conditions of a temperature of 70°C and a pressure of 20 bar 6 (kg/cm²G). The amount of polymer continuously withdrawn during the operation was about 650 kg in total. During the operation, it was possible easily to control the temperature distribution of the fluidized bed measured at 5 locations in the reaction vessel, within ±0.3°C.

After completion of the operation the reaction vessel was opened and inspected. As a result, neither adhesion of polymer nor deposition of larger and rougher particles was observed on the wall of the vessel, the agitating element and the distribution plate. No escape of fine particles was observed in a 325 mesh filter provided on the exhaust gas line, nor were rougher particles of 10 mesh or larger present in the polymer discharged at the discharge port during the operation.

The values of physical properties of a film prepared from the resulting polymer are shown in the following Table 1.

Comparative Example 1

Example 1 was repeated, but the shape of the reaction vessel was varied. Fig. 3 shows a schematic view of the reaction vessel employed in this Comparative example. The reaction vessel had a vertical, cylindrical, fluidized bed part of 30 cm in diameter and 90 cm high, as the lower part of the vessel; a vertical, cylindrical space part of 45 cm in diameter and 45 cm high, as the higher part thereof; and an inverted truncated cone part of 15 cm high (an inclination with the central axis of the vessel, of about 26.5°) as the intermediate part between the above two parts; the fluidized bed part was provided with an agitating element of two-stage, double ribbon type; and a quenching agent was injected at 10 injection ports dispersedly arranged at the fluidized bed part. After. Completion of the operation, the reaction vessel was opened and inspected. As a result, deposit of a layer of about 5 mm thick of polypropylene powder was observed at the conical part. The deposit had a MFR of 1.3. The values of physical properties of a film prepared from the resulting polymer are shown in Table 1.

TABLE 1

| Physical properties | Test method | Units | E1** | CE1* |
|---|---|---|---|---|
| MFR | ASTMD-1238 | g/10 min | 12.2 | 12.0 |
| Haze, 30 micron | ASTMD-1003 | % | 1.7 | 3.1 |
| Haze, 60 micron | ASTMD-1003 | % | 2.2 | 5.1 |
| Haze, 90 micron | ASTMD-1003 | % | 3.3 | 8.7 |
| Young's modulus, TD | ASTMD-882 | kg/mm$^2$ | 77 | 76 |
| Young's modulus, MD | ASTMD-882 | kg/mm$^2$ | 79 | 75 |
| Tear strength, TD | ASTMD-1922 | g/mil | 35 | 20 |
| Tear strength, MD | ASTMD-1922 | g/mil | 152 | 91 |

**Example 1
*Comparative Example 1

As apparent from Table 1, the physical properties of the film of the polymer obtained in the Comparative example are inferior to those in the case of Example 1. The reason is presumed to be due to the fact that a polymer having a higher molecular weight is present in admixture.

Comparative Example 2

Example 1 was repeated except that the catalyst used was not subjected to the preliminary polymerization. When 5 hours elapsed after start of the operation, an abnormal sound began to be generated in the reaction vessel, and the rotation of the agitating element fell into a bad condition. When 7 hours elapsed after start of the operation, the agitating motor stopped due to overload; hence the operation was stopped. The reaction vessel was opened and inspected. As a result, several fist-sized lumps and about 7 kg of rougher particles of 10 mesh or larger were found in the vessel. Also, fine particles as much as about 43 kg had accumulated in a filter provided on the exhaust gas line. These fine particles included a large quantity of slightly pink catalyst particles having a polymerization activity, and when these fine particles were allowed to stand in the air, they generated a white smoke.

Comparative Example 3

Example 1 was repeated except that the quenching agent was injected through 10 nozzles arranged in the form of ring at the space at the upper part of the reaction vessel.

Twenty hours after start of the operation, fine particles accumulated in the filter provided on the exhaust gas line, and the pressure difference across the filter rose up to 2 bar 6 /Kg/cm$^2$G) to make difficult the feed of the raw material gas to the reaction vessel. Thus the operation was stopped. The temperature distribution of the fluidized bed during the operation varied as wide as ±2°C, and particularly, just before the stopping of the operation, the difference between the temperatures at the upper and lower parts of the fluidized bed was in the vicinity of 5°C.

Example 2
(Gas phase polymerization of ethylene)
Ethylene gas phase polymerization was carried out employing the polymerization apparatus of Example 1.

Catalyst preparation
Into the 101 capacity preliminary polymerization vessel were fed 51 of isopentane and 1000 g of a 10% solution of triethylaluminium in isopentane, followed by 50 g of a supported catalyst (4.5 mg of Ti supported on 1 g of the catalyst) obtained by supporting TiCl$_4$ on a reaction product in the presence of a polysiloxane, which reaction product had been obtained by reacting 80 g of aluminium trichloride with 58 g of magnesium hydroxide in a nitrogen atmosphere at 130°C for 10 hours. Isopentane was further added to make the total volume 71. Preliminary polymerization was carried out by continuously feeding ethylene containing 20% by mol of hydrogen to the catalyst liquid obtained above, at 20°C under normal pressures for 6 hours. The resulting preliminary polymerization catalyst had a density of 1.23 g/cm$^3$. The preliminary polymerization catalyst was stored in the form of a 5% isopentane suspension. A 10% isopentane solution of triethylaluminium was separately prepared.

Operation
Three kg of polyethylene powder prepared in advance were fed into the reaction vessel, and the agitating element was rotated at a rate of 100 cm/sec in terms of the peripheral velocity at the largest diameter thereof. The following were then continuously fed: ethylene containing 35% by mol of hydrogen at a rate of 1.8 cm/sec (about 751/min) in terms of the superficial velocity just above the distribution plate; the pretreated catalyst liquid at a rate of 130 g/hr and the triethylaluminium solution at a rate of 40 g/hr; and further isopentane as the quenching agent at a rate of about 50 kg/hr.
Operation was continuously carried out maintaining a reaction temperature of 80°C and a pressure of 27 kg/cm$^2$ for 30 hours to obtain about 350 kg of polymer. It was possible easily to control the temperature distribution in the fluidized bed during the operation within ±0.5°C. After completion of the operation, the reaction vessel was opened and inspected. As a result, neither adhesion nor deposition of polymer was observed on the wall of the vessel, the agitating element and the dispersion plate. The amount of fine particles collected in the filter provided on the exhaust gas line was only about 3 g. No rough particles greater than 10 mesh were present in the polymer discharged from the discharge port during the operation.

Claims

1. A process for gas phase polymerization of olefins by the use of a catalyst subjected to a preliminary polymerization treatment, characterised by the following steps (a) to (f):
(a) using as said catalyst subjected to a preliminary polymerization treatment, a catalyst having a density of 1.2 to 2.5 g/cm$^3$;
(b) feeding said catalyst subjected to a preliminary polymerization treatment, into a fluidized bed polymerization reaction vessel which has an inverted truncated cone shape with a ratio of the height to the diameter of the bottom part of the cone of 1:1 to 5:1 and an angle of the conical axis with the conical surface of 1 to 10°, has a vertical type agitator therein, and has a distribution plate at the bottom part of the cone for forming a fluidized bed, and feeding as fluidizing gas an olefin gas, a mixed gas of an inert gas with the olefin, a circulating olefin gas, or an inert gas, to the bottom part of the vessel to form a fluidized bed of the catalyst, the fluidizing gas being fed to the bottom part of the fluidized bed at a superficial velocity in the range between 50% of the minimal fluidization velocity of the particles and 70% of the terminal velocity of the particles;
(c) polymerizing said olefin under agitation by means of the agitator operating at an agitation velocity of 25 to 250 cm/s in terms of peripheral velocity of the agitating element at its tip end, while maintaining a temperature inside the vessel of 30 to 130°C and a pressure of 0 to 50 bar 6 (kg/cm$^2$G);
(d) continuously feeding into the fluidized bed through dispersed injection ports a liquid organic quenching agent having a favourable latent heat of vaporization for offsetting at least almost all of the polymerization heat of said olefin, the quenching agent being a vaporizable paraffin and/or the olefin to be polymerized;
(e) continuously withdrawing from the top part of said polymerization vessel a mixed gas consisting of unpolymerized olefin gas, any unpolymerized vaporized organic quenching agent and any inert gas; and
(f) removing by condensation, most of said unpolymerized organic quenching agent from said mixed gas and feeding by circulation, the resulting olefin gas mixture to the above step (b).

2. A process according to claim 1 wherein the olefin comprises one or more of ethylene, propylene, butene-1 and 4-methylpentene-1.

3. A process according to claim 1 or 2, wherein hydrogen is fed to the polymerization vessel as a polymerization rate- or polymerization degree-adjusting agent.

4. A process according to claim 1, 2 or 3, wherein the catalyst subjected to a preliminary polymerization treatment is continuously fed to the polymerization vessel and the resulting polyolefin powder is continuously withdrawn from the polymerization vessel.

5. A process according to any preceding claim, wherein the said superficial velocity is 0.5 to 6 cm/s.

6. A process according to any preceding claim, wherein the said agitation velocity is 80 to 200 cm/s.

7. An apparatus for gas phase polymerization of olefins, comprising:
a fluidized bed polymerization reaction vessel (3) which has an inverted truncated cone shape with a ratio of the height of the cone to the diameter of the bottom part of the cone of 1:1 to 5:1 and an angle of the conical axis with the conical surface of 1 to 10°, has a vertical agitator (7) therein and has a distribution plate (2) for forming at the bottom part of the cone a fluidized bed; means (8) at the top part of said polymerization reaction vessel for withdrawing inert gas or unreacted gas or unreacted olefin; means (4.4′) for feeding a catalyst subjected to a preliminary polymerization treatment and dispersed injection ports (5) constituting means for feeding a liquid organic quenching agent for removing polymerization heat, both feeding means being at locations removed from the central to the top part of said vessel; and means (9) for withdrawing polyolefin at a location between the central part and bottom part of said vessel, but above the location of the distribution plate for forming a fluidized bed.

8. An apparatus according to claim 5, wherein the body of the vessel is provided with a heating or cooling jacket.

## Patentansprüche

1. Verfahren zur Polymerisation von Olefinen in der Gasphase unter Verwendung eines einer Vorpolymerisations-behandlung unterworfenen Katalysators, gekennzeichnet durch die nachfolgenden Verfahrensstufen (a) bis (f):
(a) Es wird ein Katalysator mit einer Dichte von 1,2 bis 2,5 g/cm$^3$ als einer Vorpolymerisationsbehandlung unterworfener Katalysator verwendet;
(b) der einer Vorpolymerisationsbehandlung unterworfene Katalysator wird einem Reaktor für die Fließbettpolymerisation zugeführt, der die Form eines auf dem Kopf stehenden Kegelstumpfs mit einem Verhältnis von Höhe zu Durchmesser des Bodenteils des Kegelstumpfs von 1:1 bis 5:1 und mit einem Winkel zwischen der Konusachse und der Konischen Oberfläche von 1 bis 10° aufweist, der einen senkrecht angeordneten Rührer und am Bodenteil des Kegelstumpfs eine Verteilerplatte für Bildung einer Wirbelschicht enthält, und es wird als wirbelndes Gas ein gasförmiges Olefin, ein Gasgemisch aus einem Inertgas mit dem Olefin, ein zirkulierendes gasförmiges Olefin oder ein Inertgas dem Bodenteil des Reaktors unter Bildung einer Wirbelschicht aus dem Katalysator zugeführt, wobei das wirbelnde Gas dem Bodenteil der Wirbelschicht mit einer Oberflächengeschwindigkeit im Bereich zwischen 50% der Mindestwirbelgeschwindigkeit der Teilchen und 70% der Endgeschwindigkeit der Teilchen zugeführt wird;
(c) das Olefin wird unter Rühren mit Hilfe des Rührers polymerisiert, der mit einer Rührgeschwindigkeit von 25 bis 250 cm/s, ausgedrückt als Umfangsgeschwindigkeit des Rührelements an seinem äußersten Ende, arbeitet, währenddessen im Inneren des Reaktors eine Temperatur von 30 bis 130°C und ein Druck von 0 bis 50 bar G aufrechterhalten werden;
(d) durch verteilte Einspritzöffnungen wird der Wirbelschicht kontinuierlich ein flüssiges organisches Abschreckmittel mit einer günstigen latenten Verdampfungswärme zugeführt, um mindestens nahezu die gesamte Polymerisationswärme des Olefins auszugleichen, wobei das Abschreckmittel ein verdampfbares Paraffin und/oder das zu polymerisierende Olefin ist;
(e) vom Oberteil des Polymerisationsreaktors wird kontinuierlich ein Gasgemisch abgezogen, das aus unpolymerisiertem gasförmigem Olefin, gegebenenfalls vorhandenem unpolymerisiertem verdampftem organischem Abschreckmittel und gegebenenfalls vorhandenem Inertgas besteht; und
(f) durch Kondensation wird der größte Teil des unpolymerisierten organischen Abschreckmittels aus dem Gasgemisch entfernt, und das entstandene Olefingasgemisch wird der oben genannten Stufe (b) durch Zirkulation zugeführt.

2. Verfahren nach Anspruch 1, dadurch gekennzeichnet, daß das Olefin eines oder mehrere de Olefine Ethylen, Propylen, Buten-1 und 4-Methylpent-1-en umfaßt.

3. Verfahren nach Anspruch 1 oder 2, dadurch gekennzeichnet, daß dem Polymerisationsreaktor Wasserstoff als Mittel zur Einstellung der Polymerisationsgeschwindigkeit oder des Polymerisationsgrades zugeführt wird.

4. Verfahren nach Anspruch 1, 2 oder 3, dadurch gekennzeichnet, daß der einer Vorpolymerisationsbehandlung unterworfene Katalysator dem Polymerisationsreaktor kontinuierlich zugeführt wird und daß das entstehende Polyolefinpulver kontinuierlich aus dem Polymerisationsreaktor abgezogen wird.

5. Verfahren nach einem der vorhergehenden Ansprüche, dadurch gekennzeichnet, daß die Oberflächengeschwindigkeit 0,5 bis 6 cm/s beträgt.

6. Verfahren nach einem der vorhergehenden Ansprüche, dadurch gekennzeichnet, daß die Rührgeschwindigkeit 80 bis 200 cm/s beträgt.

7. Vorrichtung für die Polymerisation von Olefinen in der Gasphase mit
—einem Reaktor (3) für die Fließbettpolymerisation, der die Form eines auf dem Kopf stehenden Kegelstumpfs mit einem Verhältnis von Höhe des Kegelstumpfs zu Durchmesser des Bodenteils des Kegelstumpfs von 1:1 bis 5:1 und einen Winkel zwischen der Konusachse und der konischen Oberfläche von 1 bis 10° besitzt und der einen senkrechten Rührer (7) sowie eine Verteilerplatte (2) dür die Bildung einer Wirbelschicht am Bodenteil des Kegelstumpfs enthält;

—Mitteln (8) am Oberteil des Polymerisationsreaktors zum Abziehen von Inertgas oder nicht umgesetztem Gas oder nicht umgesetztem Olefin;

—Mitteln (4, 4') zum Zuführen eines einer Vorpolymerisationsbehandlung unterworfenen Katalysators und mit verteilten Einspritzöffnungen (5), die Mittel zum Zuführen eines flüssigen organischen Abschreckmittels für das Abführen von Polymerisationswärme bilden, wobei beide Zuführungsmittel an Stellen angeordnet sind, die vom Mittelteil zum Oberteil des Reaktors verlegt sind;

—und Mitteln (9) zum Abziehen von Polyolefin an einer Stelle zwischen dem Mittelteil und dem Bodenteil des Reaktors, aber oberhalb der Stelle der Verteilerplatte für die Bildung einer Wirbelschicht.

8. Vorrichtung nach Anspurch 7, dadurch gekennzeichnet, daß der Reaktorkörper mit einem Heiz- oder Kühlmantel versehen ist.

## Revendications

1. Un procédé pour la polymérisation en phase gazeuse d'oléfines par emploi d'un catalyseur soumis à un traitement préliminaire de polymérisation, caractérisé par les stades (a) à (f) suivants:

(a) on utilise comme dit catalyseur soumis à un traitement préliminaire de polymérisation d'un catalyseur ayant une masse volumique de 1,2 à 2,5 g/cm$^3$;

(b) on introduit ledit catalyseur soumis à un traitement préliminaire de polymérisation dans un récipient réactionnel de polymérisation à lit fluidisé qui a la forme d'un tronc de cône inversé avec un rapport de la hauteur au diamètre de la partie inférieure du cône de 1/1 à 5/1 et un angle entre 1' axe du cône et la surface conique de 1 à 10°, possède un agitateur de type vertical et a une plaque de distribution à la partie inférieure du cône pour former un lit fluidisé et on introduit comme gaz fluidisant un gaz oléfinique, un gaz mixte fait d'un gaz inerte et de l'oléfine, un gaz oléfinique circulant ou un gaz inerte, dans la partie inférieure du récipient pour former un lit fluidisé du catalyseur, le gaz fluidisant étant introduit par la partie inférieure du lit fluidisé à une vitesse superficielle dans la gamme entre 50% de la vitesse minimale de fluidisation des particules et 70% de la itesse terminale des particules;

(c) on polymérise ladite oléfine sous agitation au moyen de l'agitateur fonctionnant à une vitesse d'agitation de 25 à 250 cm/s exprimée par la vitesse périphérique de l'élément d'agitation à son extrémité avec maintien de la température à l'intérieur du récipient entre 30 et 130°C et de la pression entre 0 et 50 bars manométriques (kg/cm$^2$ manométrique);

(d) on introduit en continu dans le lit fluidisé par des orifices d'injection dispersés d'un agent organique liquide de refroidissement ayant une chaleur latente de vaporisation favorable pour compenser au moins la quasi-totalité de la chaleur de polymérisation de ladite oléfine, l'agent de refroidissement étant une paraffine vaporisable et/ou l'oléfine à polymériser;

(e) on évacue en continu par l'extrémité supérieure dudit récipient de polymérisation un gaz mixte constitué du gaz oléfinique non polymérisé, de tout agent de refroidissement organique vaporisé non polymérisé et de tout gaz inerte; et

(f) on élimine par condensation la majeure partie dudit agent de refroidissement organique non polymérisé dudit gaz mixte et on introduit par circulation le mélange contenant le gaz oléfinique obtenu dans le stade (b) ci-dessus.

2. Un procédé selon la revendication 1 dans, lequel l'oléfine comprend un ou plusieurs de l'éthylène, le propylène, le butène-1 et le 4-méthylpentène-1.

3. Un procédé selon la revendication 1 our 2 dans lequel de l'hydrogène est introduit dans le récipient de polymérisation comme agent d'ajustement de la vitesse de polymérisation ou du degré de polymérisation.

4. Un procédé selon la revendication 1, 2 ou 3, dans lequel le catalyseur soumis à un traitement préliminaire de polymérisation est introduit en continu dans le récipient de polymérisation et la poudre de polyoléfine obtenue est évacuée en continu récipient de polymérisation.

5. Un procédé selon l'une quelconque des revendications précédentes dans lequel ladite vitesse superficielle est de 0,5 à 6 cm/s.

6. Un procédé selon l'une quelconque des revendications précédentes, dans lequel ladite vitesse d'agitation est de 80 à 200 cm/s.

7. Un appareil pour la polymérisation en phase gazeuse d'oléfines comprenant:

un récipient de réaction de polymérisation à lit fluidisé (3) qui a la forme d'un tronc de cône inversé avec un rapport de la hauteur du cône au diamètre de la partie inférieure du cône de 1/1 à 5/1 et un angle entre l'axe du cône et la surface conique de 1 à 10°, possède un agitateur vertical (7) et a une plaque de distribution (2) pour former un lit fluidisé à la partie inférieure du cône; des moyens (8) à la partie supérieure dudit récipient de polymérisation pour évacuer le gaz inerte ou le gaz n'ayant pas réagi ou l'oléfine n'ayant pas réagi; un moyen (4, 4') pour introduire un catalyseur soumis à un traitement préliminaire de polymérisation et un moyen constituants des orifices d'injection dispersés (5) pour introduire un agent organique liquide de refroidissement pour éliminer la chaleur de polymérisation, les deux moyens d'introduction étant en des emplacements éloignés du centre à la partie supérieure dudit récipient; et un moyen (9) pour évacuer une polyoléfine en un emplacement situé entre la partie centrale et la partie inférieure ludit récipient mais au-dessus de l'emplacement de la plaque de distribution pour former un lit fluidisé.

8. Un appareil selon la revendication 5 dans lequel le corps du récipient est muni d'une jaquette de chauffage ou de refroidissement.

FIG. 1

FIG. 3

FIG. 2